# EUROPÄISCHE PATENTSCHRIFT

(11) **EP 0 779 084 B1**
(45) Veröffentlichungstag und Bekanntmachung des Hinweises auf die Patenterteilung: **03.05.2000**
(21) Anmeldenummer: 96119014.7
(22) Anmeldetag: 27.11.1996
(51) Int. Cl.: A63C 5/00, A63C 5/12

(54) **Oberbelag für Skier/Snowboards**
Top layer for skis or snowboards
Couche supérieur d'un ski ou surf des neiges

(30) Priorität: 14.12.1995 DE 29519867 U
(43) Veröffentlichungstag der Anmeldung: 18.06.1997
(73) Patentinhaber: EMS-INVENTA AG, 8002 Zürich (CH)
(72) Erfinder: Lehr, Wolfgang, 7015 Tamins (CH); Dalla Torre, Hans, Dr., 7013 Domat/Ems (CH); Pabst, Michael, 7013 Domat/Ems (CH)
(74) Vertreter: Hotz, Klaus, Dipl.-El.-Ing./ETH Patentanwalt

(56) Entgegenhaltungen:
- EP-A- 0 296 108
- EP-A- 0 459 347
- EP-A- 0 641 575
- EP-A- 0 734 833
- AT-A- 351 412
- FR-A- 2 596 286

## Beschreibung

Die Erfindung betrifft den in den Schutzansprüchen angegebenen Gegenstand.

Die Erfindung betrifft insbesondere einen neuartigen Oberbelag für (generell ausgedrückt) Schneebretter aller Art, wie Skier, Snowboards, u.s.w. aus neuartigem Material, das besonders gute Eigenschaften in Bezug auf die anwendungsbedingten Anforderungen und Umwelteinflüsse aufweist.

Ein bekanntes Verfahren zur Ausführung von dekorierten Ski-Oberbelägen wird beschrieben in EP 0 606 556 A1. Gemäss diesem Verfahren wird der Ski nach dem sogenannten Monocoque-System hergestellt, wobei der Oberbelag zunächst aus zwei Kunststoffolien aufgebaut wird, von denen die äussere transparent und die innere opak (weiss) ist Vor dem Zusammenkleben der beiden Folien und dem nachfolgenden Tiefziehen werden die Aussenseite der transparenten Oberfolie und eine der späteren Kontaktflächen zwischen der transparenten Oberfolie und der opaken Unterfolie mit unterschiedlichen Dekorationen bedruckt Als geeignete Kunststoffe für die Oberfolie werden Acrylnitril-Butadien-Styrol-Copolymer (ABS), Acrylnitril-Styrol-Copolymer (AS), thermoplastisches Polyurethan (TPU) und aliphatische Polyamide, besonders PA 11 und PA 12, angegeben. Nur für die vor äusseren Einflüssen geschützte und nicht in jedem Fall bedruckte Unterfolie werden neben Polyesteramiden, Polyetheramiden, modifizierten Polyolefinen und Styrol-Carbonsäureanhydrid-Copolymeren auch Copolyamide beansprucht.

In der nicht vorveröffentlichten EP 734 833 A, welche eine Grundlage für den Anspruch 1 bildet, wird die Anwendung von Copolyamid PA 612 aus den Monomer-Einheiten Caprolactam and Laurinlactam beschrieben.

An die Ski-Oberbelag-Oberfolie werden sehr hohe Anforderungen gestellt:
- gute Hitzebeständigkeit bei der Verarbeitung
- gute Transparenz
- Eignung für Sublimierdruck
- gute Tiefziehbarkeit oder Thermoformbarkeit
- gute UV-Beständigkeit
- hohe Kratzfestigkeit
- hohe Kälteschlagzähigkeit

Der vorliegenden Erfindung lag die Aufgabe zugrunde, ein Folienmaterial für einen Oberbelag für Skier/Snowboards zu entwickeln, der alle obigen Anforderungen mindestens so gut wie die bisher verwendeten Polymeren erfüllt, im Vergleich zu diesen aber wirtschaftlich vorteilhafter ist und ausserdem das Herstellverfahren vereinfacht.

Diese Aufgabe wird durch den Oberbelag für Skier/Snowboards gemäss Anspruch 1 und durch die Verwendung des Oberbelags für Skier und Snowboards gemäss Anspruch 5 gelöst.

In den Unteransprüchen sind vorteilhafte Ausführungsformen der Erfindung enthalten.

Die Aufgabe wird insbesondere gelöst durch den Oberbelag aus Copolyamiden auf der Basis von Laurinlactam, resp. Omega-Aminolaurinsäure-Einheiten, welche sich hervorragend als neue Materialien für diesen Einsatzbereich, insbesondere für die den externen Einflüssen ausgesetzte Aussenschicht des Ski-/Snowboard-Oberbelags eignen. Überdies braucht es für die Zusammenstellung der Schneebretter nur noch eine einzige als Monofolie oder coextrudierte Zweischicht-folie [Coex-Folie] ausgebildete Schutzfolie.

Es zeigte sich in unerwarteter Weise, dass Copolyamide, die nur teilweise aus Laurinlactam aufgebaut sind und als weitere Einheiten Caprolactam-Einheiten enthalten, die Anforderungen auch für eine bedruckte Aussenschicht sehr gut erfüllen. Sie haben gleichzeitig den Vorteil, wirtschaftlicher zu sein als die bisher verwendeten Homo-Polyamide PA 11 oder PA 12.

Das Copolyamid PA 612 hat dabei eine Caprolactam-Anteil im Bereich von 60 bis 98 Mol-%.

Die Copolyamide sind wahlweise mit verarbeitungs- oder verwendungsbedingten Zusatzstoffen aus der Gruppe Kettenregler, Katalysatoren, Gleitmittel, Antiblockingmittel, Stabilisatoren, Pigmente, Farbstoffe und Schlagzähigkeitsverbesserer in bekannter Weise und mit bekannten Mengen modifiziert.

Sehr gut geeignet als Folienmaterial für den erfindungsgemässen Oberbelag für Skier/Snowboards ist Grilon® XE 3540, ein hitze- und UV-stabilisiertes PA 612 der EMS-CHEMIE AG.

Wird eine Monofolie verwendet, so ist diese transparent und wird unterseitig bedruckt, wobei in diesem Fall ein weisser resp. weissbleibender Kleber als optischer Hintergrund zum Verbinden der Folie mit dem Ski verwendet wird.

Wird eine coextrudierte Zweischichtfolie verwendet, so ist diese aus einer transparenten Oberschicht und einer weiss pigmentierten Unterschicht als Hintergrund, basierend auf dem gleichen Copolyamid, aufgebaut und an der Oberseite bedruckt.

Eine solche, erfindungsgemässe, coextrudierte Zweischichtfolie besteht zum Beispiel aus einer nicht pigmentierten, transparenten Oberschicht aus Grilon® XE 3540 natur und einer weiss pigmentierten Unterschicht aus Grilon® XE 3540 weiss, und hat vorzugsweise eine Dicke im Bereich von 0,5 bis 1,1 mm.

Die Verbindung der bedruckten Oberbelags-Folie mit dem Ski oder dem Snowboard erfolgt nach dem Monocoque-System oder nach anderen Formgebungs- und Verklebungsverfahren aus dem Stand der Technik, wobei bei neueren Verfahren kein vorgängiges Tiefziehen mehr nötig ist.

Der erfindungsgemässe Oberbelag für Skier/Snowboards basierend auf speziellen Copolyamiden erfüllt alle technischen, wirtschaftlichen und anwendungsbedingten Anforderungen in hervorragender Weise besonders auch für alpine und nordische Langlauf- und Sprung-Skier, für Snowboards und für die Kufen von Skibobs.

Der erfindungsgemässe Oberbelag wird ferner bevorzugt dann verwendet, wenn die Oberseite der Schneebretter gegen die enorme Beanspruchung geschützt und zugleich bei der Herstellung mit Dekorationen wie zum Beispiel Aufschriften wie Firmen-Logos oder Bildern dauerhaft, ästhetisch und abwechslungsreich dekoriert oder bedruckt werden soll.

## Patentansprüche

1. Oberbelag für Skier / Snowboards bestehend aus einer Mono- oder einer coextrudierten Zweischicht-Folie aus dem Copolyamid PA612,
wobei
der Caprolactam-Anteil im Bereich von 60 bis 98 Mol-% liegt und das Copolyamid wahlweise mit Zusatzstoffen modifiziert ist.

2. Oberbelag für Skier/Snowboards nach Anspruch 1, dadurch gekennzeichnet, dass die Zusatzstoffe verarbeitungs- oder verwendungsbedingt sind, ausgewählt aus der Gruppe Kettenregler, Katalysatoren, Gleitmittel, Antiblockingmittel, Stabilisatoren, Pigmente, Farbstoffe und Schlagzähigkeitsverbesserer.

3. Oberbelag für Skier/Snowboards nach einem der vorhergehenden Ansprüche, dadurch gekennzeichnet, dass die Monofolie transparent und unterseitig bedruckt und zur Applikation mit einem weissen Kleber auf dem Ski/Snowboard geeignet ist.

4. Oberbelag für Skier/Snowboards nach einem der Ansprüche 1 bis 2, dadurch gekennzeichnet, dass die Zweischicht-Folie aus einer transparenten Oberschicht und einer weiss-pigmentierten Unterschicht aus dem gleichen Copolyamid aufgebaut und oben bedruckt ist.

5. Verwendung des Oberbelags für Skier und/oder Snowboards gemäss einem der Ansprüche 1 bis 4 als Schutz und/oder Träger zum Bedrucken.

## Claims

1. Top coating for skis/snowboards consisting of a mono-extruded or co-extruded two-layer film of the copolyamide PA612,
where the caprolactam component is within the range from 60 to 98 mole % and the copolyamide is modified with additives if required.

2. Top coating for skis/snowboards according to claim 1, characterised in that the additives are processing or use dependent, being selected from the group comprising chain regulators, catalysts, lubricants, anti-blocking agents, stabilisers, pigments, colourants and impact strength enhancers.

3. Top coating for skis/snowboards according to either of the preceding claims, characterised in that the monofilm is transparent and printed on the underside and is suitable for application with a white adhesive on the ski/snowboard.

4. Top coating for skis/snowboards according to either of claims 1 or 2, characterised in that the two-layer film is built up from a transparent top layer and a white-pigmented sub-layer of the same copolyamide and is printed on the top.

5. Use of the top coating for skis/snowboards in accordance with any of claims 1 to 4 as a barrier and/or substrate for printing.

## Revendications

1. Revêtement superficiel pour skis ou planches de surf de neige, constitué d'une feuille monocouche, ou à deux couches co-extrudées, en copolyamide PA 612,
dans lequel la part de caprolactame se situe entre 60 et 98 %, (pour cent en moles) et le copolyamide est optionnellement modifié à l'aide d'additifs.

2. Revêtement superficiel pour skis ou planches de surf de neige selon la revendication 1, caractérisé en ce que les additifs sont choisis, en fonction du traitement ou de l'utilisation, parmi le groupe des régulateurs de chaîne, des catalyseurs, des agents lubrifiants, des agents anti-agglomérants, des stabilisateurs, des pigments, des colorants et des améliorateurs de résistance aux chocs.

3. Revêtement superficiel pour skis ou planches de surf de neige selon l'une quelconque des revendications précédentes, caractérisé en ce que la feuille monocouche est transparente et imprimée sur le dessous, et elle convient pour être apposée à l'aide d'une colle blanche sur le ski ou la planche de surf de neige.

4. Revêtement superficiel pour skis ou planches de surf de neige selon l'une quelconque des revendications 1 à 3, caractérisé en ce que la feuille à deux couches est constituée d'une couche supérieure transparente et d'une couche inférieure à pigmentation blanche, du même copolyamide, et elle est imprimée sur le dessus.

5. Utilisation du revêtement superficiel pour skis ou planches de surf de neige selon l'une quelconque des revendications 1 à 4 comme protection et/ou support d'impression.
